(19) **Europäisches Patentamt / European Patent Office / Office européen des brevets**

(11) **EP 2 977 783 B1**

(12) **EUROPEAN PATENT SPECIFICATION**

(45) Date of publication and mention
of the grant of the patent:
**24.06.2020 Bulletin 2020/26**

(51) Int Cl.:
*G01S 3/74* *(2006.01)*      *G01S 3/48* *(2006.01)*
*H01Q 21/00* *(2006.01)*

(21) Application number: **15173452.2**

(22) Date of filing: **06.04.2004**

(54) **INTERFEROMETERS**

INTERFEROMETER

INTERFÉROMÈTRES

(84) Designated Contracting States:
**AT BE BG CH CY CZ DE DK EE ES FI FR GB GR
HU IE IT LI LU MC NL PL PT RO SE SI SK TR**

(30) Priority: **10.04.2003 GB 0308265
10.04.2003 EP 03252273**

(43) Date of publication of application:
**27.01.2016 Bulletin 2016/04**

(62) Document number(s) of the earlier application(s) in
accordance with Art. 76 EPC:
**04725958.5 / 1 611 455**

(73) Proprietor: **LEONARDO MW LTD
Basildon, Essex SS14 3EL (GB)**

(72) Inventors:
• **Cooper, Robert
Basildon, Essex SS14 3EL (GB)**
• **Cooper, Alexis
Basildon, Essex SS14 3EL (GB)**

(74) Representative: **Tolfree, Adam Joseph Benjamin
Leonardo MW Ltd
c/o Impetus IP Limited
Suite 31, West Devon Business Park
Brook Lane
Tavistock, Devon PL19 9DP (GB)**

(56) References cited:
**EP-A- 0 693 693**      **EP-A- 1 184 675**
**US-A- 5 892 700**

• **MALLOY N J: "ANALYSIS AND SYNTHESIS OF
GENERAL PLANAR INTERFEROMETER
ARRAYS", IEEE TRANSACTIONS ON
ACOUSTICS, SPEECH AND SIGNAL
PROCESSING, IEEE INC. NEW YORK, US, vol. 1,
14 April 1983 (1983-04-14), pages 352-355,
XP000606792, ISSN: 0096-3518**
• **HAARDT M ET AL: "3-D unitary ESPRIT for joint
2-D angle and carrier estimation", ACOUSTICS,
SPEECH, AND SIGNAL PROCESSING, 1997.
ICASSP-97., 1997 IEEE INTERNATIONAL
CONFERENCE ON MUNICH, GERMANY 21-24
APRIL 1997, LOS ALAMITOS, CA, USA,IEEE
COMPUT. SOC, US, 21 April 1997 (1997-04-21),
pages 255-258, XP010226183, ISBN:
0-8186-7919-0**

**Description**

The present invention relates to interferometers and is more particularly concerned with the measurement of angle of incidence of electromagnetic radiation incident on such an interferometer.

It is known to use a pair of antennas to detect the location of an electromagnetic signal. The pair of antennas is arranged such that the spacing between the two antennas is such that the phase difference, $\phi$, of the signals arriving at the antennas can be calculated using Bragg's law:-

$$\phi = \frac{2\pi d \sin\theta}{\lambda}$$

where $\theta$ is the angle at which the signals approach the two antennas, d is the spacing between the antennas and $\lambda$ is the wavelength of the incident radiation.

The phase difference of the incident electromagnetic signal at the two antennas can be measured and the location of the electromagnetic signal can then be determined from the angle at which the signals approach the two antennas using Bragg's law.

However, the phase difference between the signals arriving at two antennas can only be measured modulo $2\pi$. This means that for a phase difference of $\phi$ there may be more than one value that will satisfy Bragg's law thereby producing an ambiguous result. In order to overcome this problem, it is necessary to locate the pair of antennas sufficiently close so that no matter what angle, $\theta$, at which the incident radiation arrives at the antennas, the phase difference would never exceed $2\pi$. In order to do this, the phase difference, $\phi$, must be kept in the interval $[-\pi, \pi)$, such that

$$\pi > \left| \frac{2\pi d \sin\theta}{\lambda} \right|$$

For incident radiation having a frequency of less than 18GHz and an antenna specification where $\theta$ is limited such that $|\theta| < 60°$, then $d = d_0$ is 9.2mm as a suitable separation between the two antennas.

However, whilst this is possible in theory, it is practically impossible for the antennas to be less than a few centimetres apart. This leads to ambiguity as to how many $2n$ are needed to add to the measured phase to get the correct measurement.

It is therefore an object of the present invention to provide an interferometer arrangement which overcomes the problems mentioned above and provides unambiguous determinations of the angle of incidence of incident electromagnetic radiation.

According to the invention, there is provided a method of determining relative positions of at least three antennas of an antenna array utilized in an interferometer arrangement according to claim 1.

For a better understanding of the present invention, reference will now be made, by way of example only, to the accompanying drawings in which:-

Figure 1 is a schematic block diagram of conventional apparatus for determining the location of a radar or other incident electromagnetic radiation;

Figure 2 is a schematic block diagram of apparatus for determining the location of a transmitter of electromagnetic radiation in accordance with the present invention;

Figure 3 illustrates one embodiment of an antenna array for use in the apparatus of Figure 2;

Figure 4 illustrates the number of pairings from four antennas;

Figure 5 illustrates the possible combinations for selecting four pairings for four antennas;

Figure 6 illustrates a simplified embodiment of an antenna array in accordance with the present invention;

Figure 7 illustrates Bragg's law for three dimensions where an antenna array is aligned in the $x$-$y$ plane;

Figure 8 illustrates a simplified drawing of a second embodiment of an antenna array for use in the apparatus of Figure 2; and

Figure 9 illustrates a second simplified embodiment of an antenna array in accordance with the present invention.

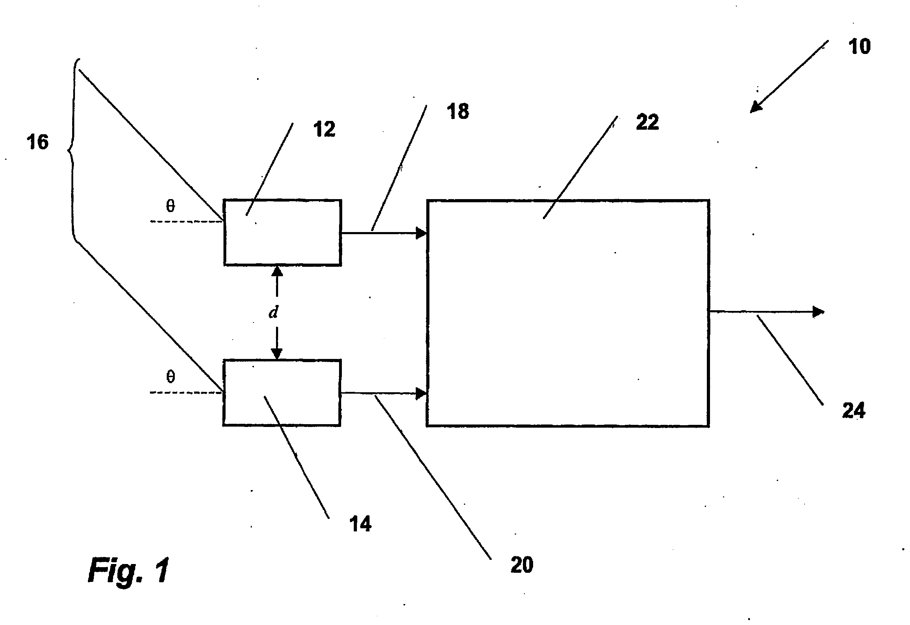

Referring initially to Figure 1, a conventional interferometer arrangement 10 is shown in which two antennas 12, 14 are spaced apart a distance, $d$. Each antenna 12, 14 is arranged to receive a plane wave 16 of electromagnetic radiation being emitted from a transmitter (not shown) located at an unknown angle, $\theta$. Each antenna 12, 14 is selected to receive radiation from the plane wave 16 at a particular frequency and hence wavelength, $\lambda$.

Each antenna 12, 14, when it receives radiation from the plane wave 16, produces an output signal 18, 20 which is passed to a processor 22 for processing. Processor 22 determines the unknown angle, $\theta$, of the transmitter using Bragg's law:-

$$\phi = \frac{2\pi d \sin\theta}{\lambda}$$

as the phase difference, $\phi$, between the radiation arriving at each antenna 12, 14 can also be measured or determined. However, as mentioned above, the phase difference between the signals arriving at each antenna 12, 14 can only be measured to modulo $2\pi$ and ambiguity may exist in the determined value of $\theta$.

If $\chi$ is the phase difference which is actually measured between the two antennas, then the errors can be expressed as follows:

$$\chi = \alpha d + \varepsilon + \Delta$$

where

$$\alpha = \frac{2\pi \sin\theta}{\lambda}, \varepsilon \sim N(0, \sigma^2)$$

and $\Delta$ is the deterministic error and $\varepsilon$ is a random variable which is distributed with a normal distribution having a mean of 0 and a variance of $\sigma^2$. For ease of explanation, $\Delta$ will be ignored in the following example, but it will be readily appreciated that $\Delta$ can be allowed for in any practical system in accordance with known processing techniques.

Deterministic errors refer to the phase measurement errors which have a non-zero mean between RF antenna channels and occurs where two channels of a M-channel RF switch is used with a systematic path difference in the switch. The present invention allows for sequential measurement of the antenna pair phase difference (two channel receiver) or simultaneous measurement of phase at each antenna (N-channel receiver) and the subtraction of the phases to form the phase differences. The choice of measurement scheme is reflected in the measurement covariance matrix R which is diagonal for the first case and non-diagonal for the second case.

Non-deterministic errors refer to the phase measurement errors which have a zero mean between RF antenna channels. These errors would occur where the RF channels behind the antennas are perfectly matched, for example, matched cables and no path differences introduced by RF switches.

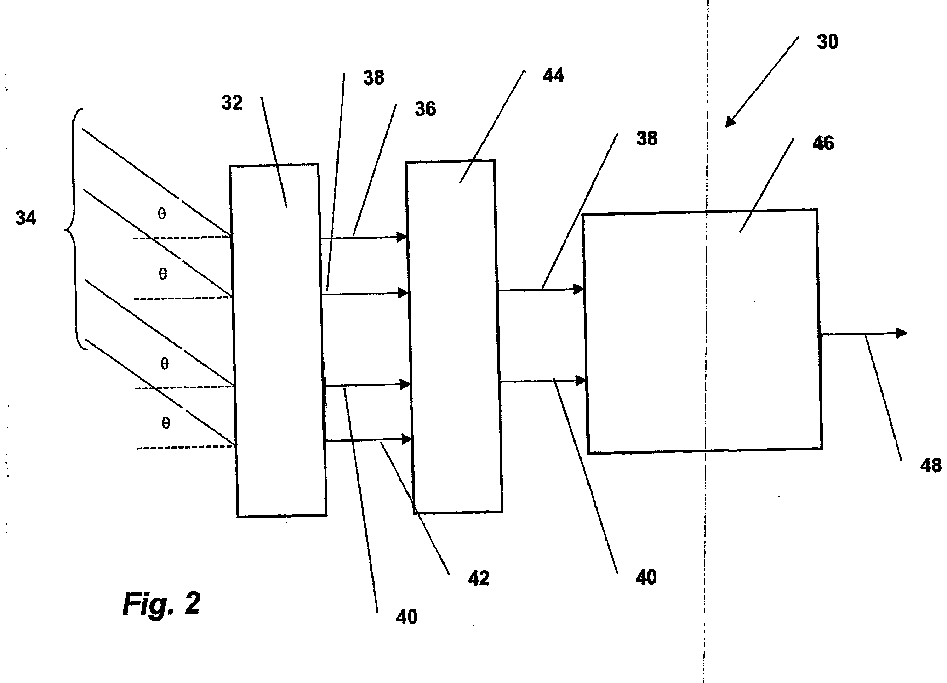

In accordance with the present invention, an improved interferometer arrangement 30 is shown in Figure 2. The interferometer arrangement 30 comprises an antenna array 32 which receives a plane wave 34 of electromagnetic radiation from a transmitter (not shown) located at an unknown angle, $\theta$, as before. The antenna array 32 comprises a plurality of antennas which receive the radiation of the plane wave 34. In this particular example, there are four antennas (not shown individually). Each antenna provides an output signal 36, 38, 40, 42 to a switching unit 44 which selects two of the output signals, say 38, 40, to pass to processor 46 for processing. Here, four pairs of signals from different antenna pairs are selected and passed to the processor for processing. Processor 46 processes the four pairs of signals and provides an output signal 48 which gives the value of $\theta$.

Alternatively, if a digital receiver is used to receive the signals, switching unit 44 is not needed. This is because the signals received by the digital receiver can be combined in any way necessary to provide $\theta$.

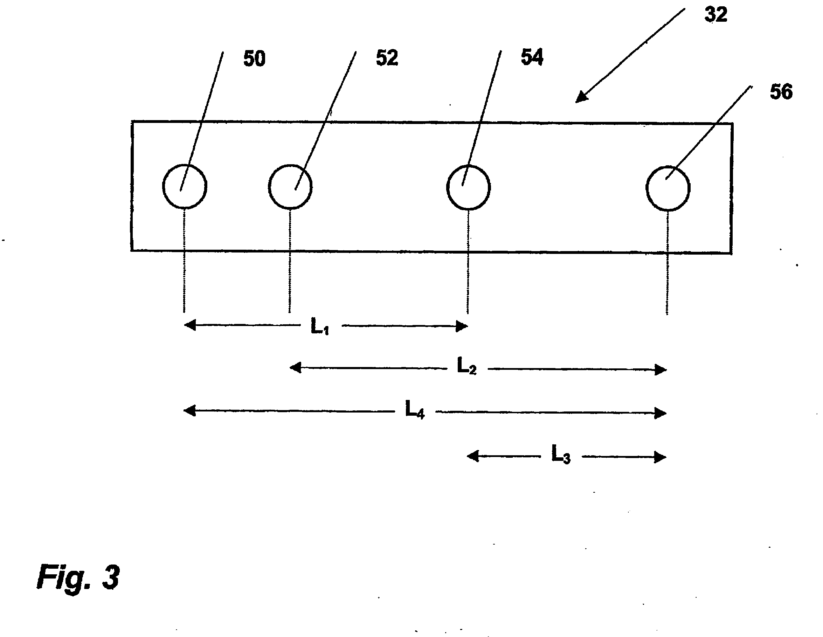

Figure 3 illustrates one embodiment of an antenna array 32 in more detail. The array 32 includes four antennas 50, 52, 54, 56 arranged in a straight line. Each antenna 50, 52, 54, 56 may comprise a spiral antenna as described in EP-A-1 026 777. Alternatively, any other suitable antenna can be used.

Each antenna 50, 52, 54, 56 is spaced from its adjacent antennas such that the spacing between antenna 50 and antenna 54 is $L_1$, the spacing between antenna 52 and antenna 56 is $L_2$, the spacing between antenna 54 and antenna 56 is $L_3$, and the spacing between antenna 50 and antenna 56 is $L_4$. The choice of pairings is by way of example in this particular embodiment.

As discussed above, for radiation frequencies of less than 18GHz, the value of the spacing, $d_0$, between a pair of antennas which allows the phase to be unambiguously identified is 9.2mm. In accordance with the present invention, $L_1$, $L_2$, $L_3$ and $L_4$ are chosen to be integral multiples of $d_0$, that is:

$$L_1 = k_1 d_0$$
$$L_2 = k_2 d_0$$
$$L_3 = k_3 d_0$$
$$L_4 = k_4 d_0$$

where $k_1$, $k_2$, $k_3$, $k_4$ are relatively prime. This means that the values of $k_1$, $k_2$, $k_3$, $k_4$ have a highest common factor such that $hcf(k_1, k_2, k_3, k_4) = 1$.

By combining measurements of phase difference between various pairs of antennas in antenna array 32, a good estimate of the phase difference that would be measured between two antennas that had a separation distance $d_0$ can be obtained. This unambiguously gives the angle of arrival, $\theta$.

However, it is to be noted that when choosing the values of $k_1$, $k_2$, $k_3$, $k_4$ the values must be physically realisable. One way of determining if the values of $k_1$, $k_2$, $k_3$, $k_4$ are physically realistic is by running through all possible values for $k_1$, $k_2$, $k_3$, $k_4$ for each possible way of separating four antennas, and for each way, examining the different values of $k_1$, $k_2$, $k_3$, $k_4$ produced by picking different sets of pairs of antennas.

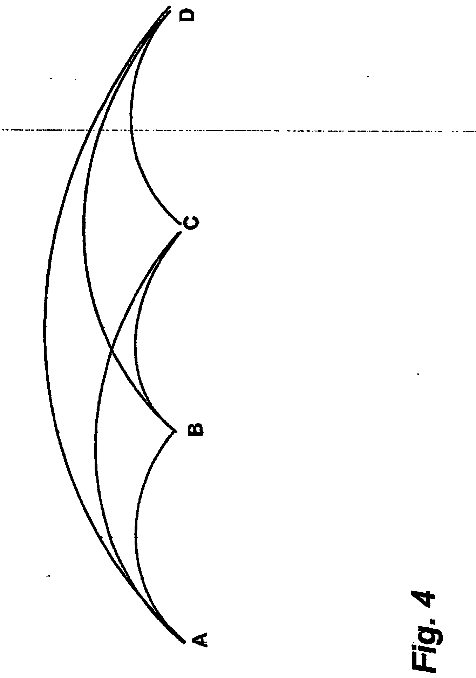

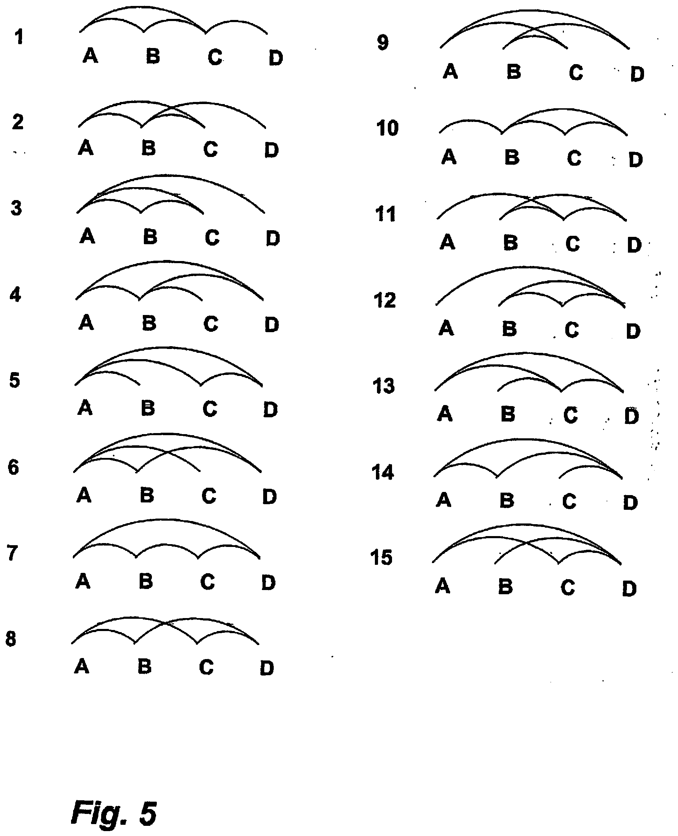

For example, for the example shown in Figure 3, four pairs of antennas must be picked from the six possible choices as shown in Figure 4. This gives 15 different ways of choosing four pairs of antennas as shown in Figure 5. Of the 15 different choices shown, choices 1 to 6 can be considered as being mirror images of choices 10 to 15 and therefore the choices can be limited to choices 1 to 9.

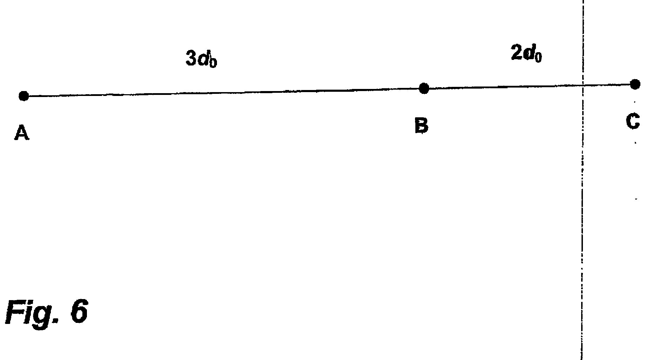

When an antenna array 32 as described with reference to Figure 3 is utilised in the interferometer arrangement 30, a plurality of virtual interferometers is formed. In order to describe how this works in more detail, a simpler antenna array having three antennas is illustrated in Figure 6.

In Figure 6, a line of three antennas A, B, C is shown. Each pair of antennas A-B, B-C, A-C has an integer multiple of $d_0$ between them as shown, namely, $3d_0$ between A-B, $2d_0$ between B-C and $5d_0$ between A-C. In this example, three virtual interferometers can be constructed and $M$=3. In general, if there are several antennas in a line, it is necessary to identify $M$ pairs of antennas and make $M$ phase difference measurements between these pairs. The same antennas may be used in more than one pair, but note that if the measurements are to be independent, it may be necessary to do one measurement a split second after another.

In the example shown in Figure 6, k = $(5,2,3)^T$ if the signals are processed from antenna pairs in the order A-C, B-C and A-B.

In order to determine the positions of the antennas in a particular space, it is necessary to determine the maximum size allowed for the antenna array in the $x$ and $y$ directions. The antenna coordinates are integral numbers of the separate unit distances in the $x$ and $y$ directions respectively. The choice of unit distances determines the frequency and unambiguous angle range in horizontal and vertical elevations.

The next step is to determine the number of antennas to be used and the number of antenna pairs which are to be used to measure phase differences. It is not required to have a common reference antenna. A set of possible antenna meta x-coordinate spacings $\{K\}$ is constructed. The term 'spacing' means the distance between antenna pairs selected to make a measurement. These are not the physical antenna $x$-coordinates but just a stage in the determination. The spacings have a highest common factor (HCF) of 1. Similarly, a set of all possible $y$-coordinate spacings $\{K_y\}$ is constructed for the $y$-dimension. All values for $x$ and $y$ are excluded if they fall outside the maximum size of the array.

A set of physical spacing matrices $\{K =[K_x K_y]\}$ is produced by iterating over all possible physical $x$ - and $y$ -antenna positions. From the set of possible $K$ matrices and the set of possible meta $x$-coordinate spacings $\{K'_x\}$, combinations are chosen which have a mapping matrix $Q_x$ which satisfies the condition $Q_x K_x = K'_x$ and $Q_x K_y = 0$. A candidate set is recorded in accordance with the candidate geometries $(K, Q_x)$. The candidate set is edited to remove mirror-image candidate geometries.

A set of possible antenna meta $y$-coordinate spacings $\{K'_y\}$ are constructed. As before, these have HCF=1. From the candidate geometries $(K, Q_x)$ and the set of meta $y$-coordinate spacings $\{K'_y\}$, combinations are chosen which have a mapping matrix $Q_y$ which satisfies the condition $Q_y K_y = K'_y$ and $Q_y K_x = 0$. The candidate geometries $(K, Q_x, Q_y)$ are recorded in the candidate set.

For each geometry $(K, Q_x, Q_y)$ in the candidate set, two matrices $P_x$ and $P_y$ are found which satisfy $P_x K'_x = \xi$ and $P_y K'_y = \xi$ where $\xi$ is a column vector of all 1s. All entries without a solution are rejected and the candidate geometries

$(K, Q_x, Q_y, P_x, P_y)$ are recorded in the candidate set.

For each candidate antenna configuration, statistical measurement accuracy is calculated and the best candidate antenna configurations are selected for constructing the base plate of the antenna design.

It is to be noted that the difference between a deterministic and non-deterministic design revolves around the calculation of the matrices $(K, Q_x, Q_y, P_x, P_y)$ with the condition that $P_x Q_x \xi = \mathbf{o}$ and $P_y Q_y \xi = \mathbf{o}$ where $\mathbf{o}$ is a column vector of zeros. The size of $Q_x$, $Q_y$, $P_x$ and $P_y$ is reduced by one column vector to accommodate this.

In order to construct $N$ virtual interferometers, where $N \le M$, a $M \times N$ matrix P is produced such that $P^T \mathbf{k} = \xi$

$$\xi = \begin{pmatrix} 1 \\ \dots \\ 1 \end{pmatrix}$$

where $\qquad$ of length $N$ and k is the matrix of the values of $k_1, \dots, k_m$. If the vectors $\mathbf{p}_1, \dots, \mathbf{p}_N$ are the columns of $P$,

then for m = 1, .., N, $\mathbf{p}_m^T \mathbf{k} = 1$.

For example, when $N = 3$,

$$P = \begin{pmatrix} -1 & 1 & 0 \\ 0 & -2 & 2 \\ 2 & 0 & -1 \end{pmatrix},$$

$$\mathbf{p}_1 = \begin{pmatrix} -1 \\ 0 \\ 2 \end{pmatrix},$$

$$\mathbf{p}_2 = \begin{pmatrix} 1 \\ -2 \\ 0 \end{pmatrix},$$

$$\mathbf{p}_3 = \begin{pmatrix} 0 \\ 2 \\ -1 \end{pmatrix}$$

$$\chi = \begin{pmatrix} \chi_1 \\ \dots \\ \chi_M \end{pmatrix} \qquad \varepsilon = \begin{pmatrix} \varepsilon_1 \\ \dots \\ \varepsilon_M \end{pmatrix},$$

Now if $\qquad$ and $\qquad$ then $\chi = (\alpha d_0)\mathbf{k} + \varepsilon$ where $\alpha = \dfrac{2\pi \sin\theta}{\lambda}$.

If the phase difference, $\zeta_m$, associated with the $m$th virtual interferometer is defined as $\zeta_m = \mathbf{p}_m^T \chi$ and

$$\zeta = \begin{pmatrix} \zeta_1 \\ \dots \\ \zeta_N \end{pmatrix},$$

then $\zeta = P^T \chi = \beta\xi + P^T \varepsilon$

where $\beta = \alpha d_0$.

For example,

$$\begin{pmatrix} \zeta_1 \\ \zeta_2 \\ \zeta_3 \end{pmatrix} = \begin{pmatrix} 2\chi_3 - \chi_1 \\ \chi_1 - 2\chi_2 \\ 2\chi_2 - \chi_3 \end{pmatrix} = \beta \begin{pmatrix} 1 \\ 1 \\ 1 \end{pmatrix} + \begin{pmatrix} 2\varepsilon_2 - \varepsilon_1 \\ \varepsilon_1 - 2\varepsilon_2 \\ 2\varepsilon_2 - \varepsilon_3 \end{pmatrix}$$

Given measurements $\zeta_1,...,\zeta_N$, it is necessary to estimate $\beta$. It is possible to use the Maximum Likelihood Estimator (MLE), which is the value of $\beta$ which maximises the joint density function given the measurements, that is,

given $\zeta = \begin{pmatrix} \zeta_1 \\ ... \\ \zeta_N \end{pmatrix}$, maximise $\dfrac{1}{((2\pi)^n |C|)^{1/2}} \exp(-\dfrac{1}{2}\delta^T C^{-1}\delta)$ with respect to $\beta$ where $C = P^T R P$ and $\delta \sim N(\mathbf{0}, C)$.

This is achieved by minimising $H = \delta^T C^{-1}\delta$.

If the estimate is $\hat{\beta}$, then since C is symmetric

$$0 = \frac{\partial H}{\partial \beta}\bigg|_{\beta=\hat{\beta}}$$

$$= \frac{\partial}{\partial \beta}\left((\zeta - \beta\xi)^T C^{-1}(\zeta - \beta\xi)\right)\bigg|_{\beta=\hat{\beta}}$$

$$= \xi^T C^{-1}(\zeta - \hat{\beta}\xi) - (\zeta - \hat{\beta}\xi)^T C^{-1}\xi$$

$$= -2\xi^T C^{-1}(\zeta - \hat{\beta}\xi)$$

Hence $\hat{\beta} = \dfrac{\xi^T C^{-1}\zeta}{\xi^T C^{-1}\xi}$ and $E(\zeta) = E(\beta\xi + P^T\varepsilon) = \beta\xi$ and it follows that $E(\hat{\beta}) = \beta$ and the estimator is unbiased. The estimator variance is:

$$E(\beta - \hat{\beta})^2 = E\left(\beta - \frac{\xi^T C^{-1}\zeta}{\xi^T C^{-1}\xi}\right)^2$$

$$= E\left(\beta - \frac{\xi^T C^{-1}(\beta\xi + \delta)}{\xi^T C^{-1}\xi}\right)^2$$

$$= E\left(\frac{\xi^T C^{-1}\delta}{\xi^T C^{-1}\xi}\right)^2$$

$$= E\left(\frac{\xi^T C^{-1}\delta\delta^T (C^{-1})^T \xi}{(\xi^T C^{-1}\xi)^2}\right)$$

$$= \frac{\xi^T C^{-1} E(\delta\delta^T)(C^{-1})^T \xi}{(\xi^T C^{-1}\xi)^2}$$

$$= \frac{\xi^T C^{-1} C (C^{-1})^T \xi}{(\xi^T C^{-1}\xi)^2}$$

$$= \frac{1}{\xi^T C^{-1}\xi}$$

since $E(\delta\delta^T) = C$ by definition and C is symmetric.

In the example above, if errors $\varepsilon_1$, $\varepsilon_2$ and $\varepsilon_3$ are independent, then $R = \sigma^2 I$ and

$$C = P^T R P$$

$$= \sigma^2 P^T P$$

$$= \sigma^2 \begin{pmatrix} -1 & 0 & 2 \\ 1 & -2 & 0 \\ 0 & 2 & -1 \end{pmatrix} \begin{pmatrix} -1 & 1 & 0 \\ 0 & -2 & 2 \\ 2 & 0 & -1 \end{pmatrix}$$

$$= \sigma^2 \begin{pmatrix} 5 & -1 & -2 \\ -1 & 5 & -4 \\ -2 & -4 & 5 \end{pmatrix}$$

$$C^{-1} = \frac{1}{4\sigma^2} \begin{pmatrix} 9 & 13 & 14 \\ 13 & 21 & 22 \\ 14 & 22 & 24 \end{pmatrix}$$

$$\xi^T C^{-1} = \frac{1}{\sigma^2} \begin{pmatrix} 9 & 14 & 15 \end{pmatrix}$$

$$\xi^T C^{-1} \xi = 38 \frac{1}{\sigma^2}$$

Therefore, $\hat{\beta} = \dfrac{9\zeta_1 + 14\zeta_2 + 15\zeta_3}{38}$ and the variance $E\left(\hat{\beta} - \beta\right)^2 = \dfrac{1}{\xi^T C^{-1} \xi} = \dfrac{\sigma^2}{38}$

It is to be noted that values $\chi_1, ..., \chi_M$ and $\zeta_1, ..., \zeta_N$ are only known modulo $2\pi$, but since $\zeta_j$ represents a phase difference of a virtual interferometer of unit distance, $d_0$, then the value $\zeta_j$ which is taken to lie in the interval $[-\pi, \pi)$, is the correct phase.

If the correct number of $2\pi$'s are known to add onto $\tilde{\chi}_j$ to make $\chi_j$, then it would not be necessary to construct the $\zeta_j$'s. The sole purpose of the $\zeta_j$'s is to get over the problem of the 'lost' $2\pi$'s. If the correct number of $2\pi$'s is known to add to $\tilde{\chi}_j$ to make $\chi_j$, then $\zeta = P^T \chi$ and $\xi = P^T \mathbf{k}$.

Hence

$$\hat{\beta} = \frac{\xi^T C^{-1} \zeta}{\xi^T C^{-1} \xi}$$

$$= \frac{\mathbf{k}^T P (P^T R P)^{-1} P^T \chi}{\mathbf{k}^T P (P^T R P)^{-1} P^T \mathbf{k}}$$

and the variance

$$E(\hat{\beta}-\beta)^2 = \frac{1}{\xi^T C^{-1}\xi}$$

$$= \frac{1}{\mathbf{k}^T P(P^T RP)^{-1} P^T \mathbf{k}}$$

In the case where $M = N$ and $P$ is a square matrix, then $\hat{\beta} = \dfrac{\mathbf{k}^T R^{-1}\chi}{\mathbf{k}^T R^{-1}\mathbf{k}}$ and $E(\hat{\beta}-\beta)^2 = \dfrac{1}{\mathbf{k}^T R^{-1}\mathbf{k}}$.

Furthermore, if the measurements are independent so that $R = \sigma^2 I$ then $\hat{\beta} = \dfrac{\mathbf{k}^T\chi}{\|\mathbf{k}\|^2}$ and $E(\hat{\beta}-\beta)^2 = \dfrac{\sigma^2}{\|\mathbf{k}\|^2}$.

For example $\hat{\beta} = \dfrac{5\chi_1 + 2\chi_2 + 3\chi_3}{38}$ and $E(\hat{\beta}-\beta)^2 = \dfrac{\sigma^2}{38}$.

If nullifying deterministic error has to be considered, then $P$ will be forced not to be a square matrix.

$\hat{\beta}$ is always an unbiased estimator, no matter how $\mathbf{k}$ and $P$ are chosen. So the problem is to find k and $P$ that

$$E(\hat{\beta}-\beta)^2 = \frac{1}{\mathbf{k}^T P(P^T RP)^{-1} P^T \mathbf{k}} = \frac{1}{\xi^T C^{-1}\xi}.$$

minimises

It may seem, by the expression on the right hand side that $E(\hat{\beta}-\beta)^2$ does not depend on $\mathbf{k}$, since $\xi = (1, 1, ..., 1)^T$ and $C = P^T RP$, but different choices of $\mathbf{k}$ allow different choices of $P$, so $E(\hat{\beta}-\beta)^2$ must be minimised over all possible $\mathbf{k}$ and $P$.

$\mathbf{k}$ is chosen such that $hcf(k_1, ..., k_m) = C$ where $C$ is the largest positive integer to divide $k_i$ for every $i = 1, ..., M$. In forming a column of $P$, a vector $\mathbf{p} = (p_1, ..., p_m)^T$ must be found such that $\mathbf{k}^T\mathbf{p} = 1$, that is, for $M$ linearly independent vectors $\mathbf{p}_1, ..., \mathbf{p}_m, \mathbf{p}_1^T\mathbf{k} = \mathbf{p}_2^T\mathbf{k} = ... = \mathbf{p}_m^T\mathbf{k} = 1$. However, it can be shown that this is only valid if and only if $hcf(k_1, ..., k_m) = 1$.

As the possible choices of $\mathbf{k}$ and $P$ are searched to minimise the variance, $E(\hat{\beta}-\beta)^2$, it is only necessary to search through $\mathbf{k} = (k_1, ..., k_M)^T$ with $hcf(k_1, ..., k_M)=1$.

In the case where $\Delta$, the deterministic error is zero, it is possible to find $M$ linearly independent vectors $\mathbf{p}_1, ..., \mathbf{p}_M$ such that $\mathbf{p}_m^T\mathbf{k} = 1$ for all $M$. This means that P can be made into a square $M$x$M$ matrix,

$$\text{Hence } E\left(\hat{\beta}-\beta\right)^2 = \frac{1}{\mathbf{k}^T R^{-1}\mathbf{k}}$$

If $\Delta \neq 0$, it is always possible find $M - 1$ linearly independent vectors and never any more, such that $\mathbf{p}_m^T\mathbf{k} = 1$ and $\mathbf{p}_m^T\xi' = 0$ for all $m$. The extra condition $\mathbf{p}_m^T\xi' = 0$ has reduced the number of linearly independent vectors that can be found by one. Now $P$ is a $M$x$(M - 1)$ matrix and

$$E\left(\hat{\beta}-\beta\right)^2 = \frac{1}{\xi^T C^{-1}\xi}$$

where $C = P^T RP$

If the antennas are to be fixed into a relatively small space, for example taking up no more than about 50 to 100cm, the search can be limited to those k's with entries less than 100.

Whilst the antenna array 32 of Figure 3 has been described as being one-dimensional, that is, a plurality of antennas spaced at different distances along the same straight line, the antenna array 32 may also comprise a plurality of antennas spaced at different distances in the same plane.

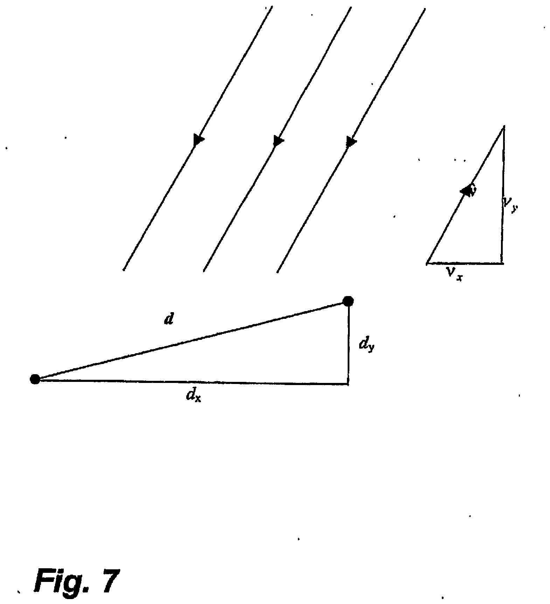

Before describing a specific embodiment of such a two-dimensional or planar arrangement, Bragg's law in two dimensions will be discussed with reference to Figure 7.

In Figure 7, a plane wave is shown incident on a pair of antennas lying in the $x$-$y$ plane which are spaced apart by a distance vector $\mathbf{d} = d_x\mathbf{i} + d_y\mathbf{j}$. The $x$- and $y$-component distances are integrals of the same unit spacing $d_0$. The plane wave arrives in a direction described by the unit vector $\hat{\mathbf{v}} = (v_x, v_y, v_z)^T$ in three dimensions. The phase difference, in two dimensions, experienced between the two antennas is

$$\frac{2\pi}{\lambda}\mathbf{d}^T\hat{\mathbf{v}} = \frac{2\pi}{\lambda}d_x v_x + \frac{2\pi}{\lambda}d_y v_y$$

$$\phi_x = \frac{2\pi d_0 v_x}{\lambda}$$

and is the theoretical phase difference that would be measured between two antennas separated by

$$\phi_y = \frac{2\pi d_0 v_y}{\lambda}$$

the distance vector $d_0\mathbf{i}$ and is the theoretical phase difference corresponding to the distance vector $d_0\mathbf{j}$.

If two antennas are separated by distance vector $\mathbf{d}$, then, $\chi$, the phase difference measured between the two

$$\chi = \frac{2\pi \mathbf{d}^T \mathbf{v}}{\lambda} + \varepsilon$$

antennas, satisfies where $\varepsilon \sim N(0, \sigma^2)$.

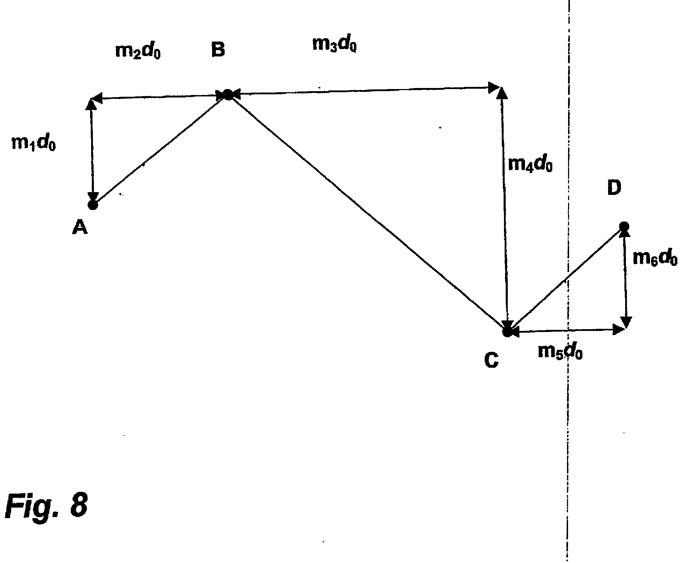

Figure 8 illustrates a two-dimensional arrangement in which four antennas A, B, C, D are placed in a plane rather than a straight line with separations in the $\mathbf{i}$ and $\mathbf{j}$ directions which are integer multiples of $d_0$ as shown. In the illustrated example, antenna pair A-B are separated by $m_1d_0$ in one direction and by $m_2d_0$ in the other direction. Similarly, antenna pair B-C are separated by $m_3d_0$ and $m_4d_0$ and antenna pair C-D by $m_5d_0$ and $m_6d_0$.

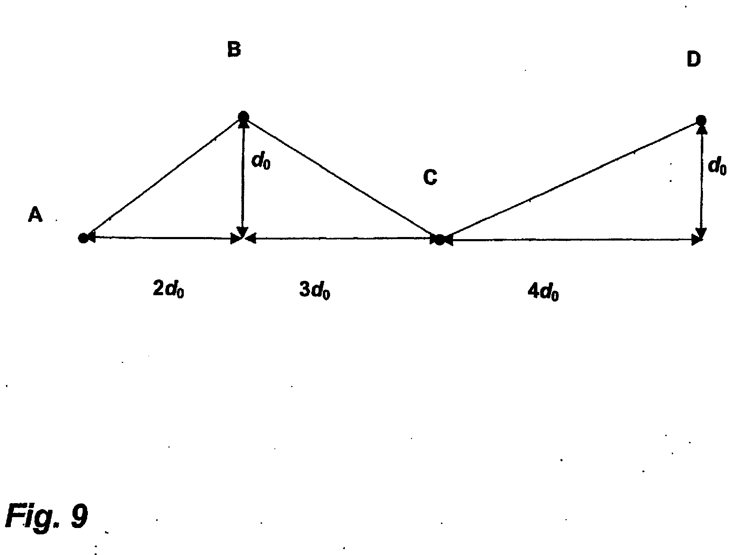

In order to describe how such a two-dimensional antenna array works, a simplified example is shown in Figure 9. Again, four antennas A, B, C, D are shown in a plane with A and C being aligned in one direction and B and D being in another direction compared to the alignment direction of A and C. Here, the integral separation is the same in the $x$ and $y$ directions. It may be difficult to obtain different angle and frequency ranges in the $x$ and $y$ directions. If the separation in the $x$ and $y$ direction respectively is $k_{j1}$, $k_{j2}$ between the antennas of the $j$th pair, then the matrix, $K$, defining these separations can be expressed as:-

$$K = \begin{pmatrix} k_{11} & k_{12} \\ k_{21} & k_{22} \\ k_{31} & k_{32} \\ k_{41} & k_{42} \end{pmatrix}$$

Using the antenna pairs of A-B, C-D, A-D and B-C, $K$ can be populated for the example in Figure 9 as follows:-

$$K = \begin{pmatrix} 2 & 1 \\ 4 & 1 \\ 9 & 1 \\ 3 & -1 \end{pmatrix}$$

If $\chi_1$, $\chi_2$, $\chi_3$, $\chi_4$ are the measured phase differences between these antenna pairs, then the matrix of these phase differences can be expressed as $\chi = (\chi_1, \chi_2, \chi_3, \chi_4)^T$ and the matrix of the phase measurement error as $\varepsilon = (\varepsilon_1, \varepsilon_2, \varepsilon_3, \varepsilon_4)^T$. It then follows that

$$\chi = K\begin{pmatrix} \phi_x \\ \phi_y \end{pmatrix} + \varepsilon$$

which becomes

$$\begin{pmatrix} \chi_1 \\ \chi_2 \\ \chi_3 \\ \chi_4 \end{pmatrix} = \begin{pmatrix} 2\phi_x + \phi_y + \varepsilon_1 \\ 4\phi_x + \phi_y + \varepsilon_2 \\ 9\phi_x + \phi_y + \varepsilon_3 \\ 3\phi_x - \phi_y + \varepsilon_4 \end{pmatrix}$$

for the particular example in Figure 9.

To determine $\phi_x$ and $\phi_y$, two $N$x4 matrices, $Q_x$ and $Q_y$ need to be determined so that the rows of $Q_x$ and $Q_y$ are linearly independent such that

$[Q_x K]_{i2} = 0$ for all $i = 1,...,N$

$[Q_y K]_{i1} = 0$ for all $i = 1,...,N$

The reason for the requirement of linearly independent rows is so that no singular covariance matrices are formed. In this case,

$$Q_x = \begin{pmatrix} 1 & 0 & 0 & 1 \\ 0 & 1 & 0 & 1 \\ 0 & 0 & 1 & 1 \end{pmatrix}, \quad Q_y = \begin{pmatrix} 2 & -1 & 0 & 0 \\ 0 & 0 & 1 & -3 \\ 0 & 3 & 0 & -4 \end{pmatrix}$$

Hence

$$Q_x K = \begin{pmatrix} 5 & 0 \\ 7 & 0 \\ 12 & 0 \end{pmatrix}, \quad Q_y K = \begin{pmatrix} 0 & 1 \\ 0 & 4 \\ 0 & 7 \end{pmatrix}$$

In order to use the same method as for a linear array, the *hcf* of the $x$ and $y$ column entries (i.e. non-zero) must be 1.

Applying $Q_x$ and $Q_y$ to the phase differences, $\chi$, which have been measured gives:

$$Q_x \chi = Q_x K \begin{pmatrix} \phi_x \\ \phi_y \end{pmatrix} + Q_x \varepsilon$$

$$Q_y \chi = Q_y K \begin{pmatrix} \phi_y \\ \phi_y \end{pmatrix} + Q_y \varepsilon$$

For example,

$$\begin{pmatrix} \chi_1 + \chi_4 \\ \chi_2 + \chi_4 \\ \chi_3 + \chi_4 \end{pmatrix} = \begin{pmatrix} 5\phi_x + \varepsilon_1 + \varepsilon_4 \\ 7\phi_x + \varepsilon_2 + \varepsilon_4 \\ 12\phi_x + \varepsilon_3 + \varepsilon_4 \end{pmatrix} \text{ and } \begin{pmatrix} 2\chi_1 - \chi_2 \\ \chi_3 - 3\chi_4 \\ 3\chi_2 - 4\chi_4 \end{pmatrix} = \begin{pmatrix} \phi_y + 2\varepsilon_1 - \varepsilon_2 \\ 4\phi_y + \varepsilon_3 - 3\varepsilon_4 \\ 7\phi_y + 3\varepsilon_2 - 4\varepsilon_4 \end{pmatrix}$$

Then it is necessary to find $P_x$, $P_y$ which are $N \times N$ invertible matrices with integer entries such that

$$P_x Q_x K_x = \begin{pmatrix} 1 \\ 1 \\ \dots \\ 1 \end{pmatrix} \qquad P_y Q_y K_y = \begin{pmatrix} 1 \\ 1 \\ \dots \\ 1 \end{pmatrix}$$

of length $N$ and of length $N$, where $K_x$ and $K_y$ are the columns of $K$, i.e. $K = (K_x \, K_y)$.

If $\zeta_x = P_x Q_x \chi$, $\zeta_y = P_y Q_y \chi$, $A_x = P_x Q_x$ and $A_y = P_y Q_y$ then

$$P_x Q_x \chi = P_x Q_x K \begin{pmatrix} \phi_x \\ \phi_y \end{pmatrix} + P_x Q_x \varepsilon$$

$$\xi = \begin{pmatrix} 1 \\ 1 \\ \dots \\ 1 \end{pmatrix}$$

ie. $\zeta_x = \phi_x \xi + A_x \varepsilon$ where of length $N$ and $\zeta_y = \phi_y \xi + A_y \varepsilon$

For example

$$P_x = \begin{pmatrix} 3 & -2 & 0 \\ 5 & 0 & -2 \\ -6 & 1 & 2 \end{pmatrix} \qquad P_y = \begin{pmatrix} 0 & 2 & -1 \\ 5 & -1 & 0 \\ -6 & 0 & 2 \end{pmatrix}$$

$$A_x = P_x Q_x = \begin{pmatrix} 3 & -2 & 0 & 1 \\ 5 & 0 & -2 & 3 \\ -6 & 1 & 2 & -3 \end{pmatrix}$$

$$A_y = P_y Q_y \begin{pmatrix} 0 & -3 & 2 & -2 \\ 10 & -5 & -1 & 3 \\ -12 & -3 & 0 & -4 \end{pmatrix}$$

$$\begin{pmatrix} \zeta_{x_1} \\ \zeta_{x_2} \\ \zeta_{x_3} \end{pmatrix} = \begin{pmatrix} 3\chi_1 - 2\chi_2 + \chi_4 \\ 5\chi_1 - 2\chi_3 + 3\chi_4 \\ -6\chi_1 + \chi_2 + 2\chi_3 - 3\chi_4 \end{pmatrix} = \begin{pmatrix} \phi_x + 3\varepsilon_1 - 2\varepsilon_2 + \varepsilon_4 \\ \phi_x + 5\varepsilon_1 - 2\varepsilon_3 + 3\varepsilon_4 \\ \phi_x - 6\varepsilon_1 + \varepsilon_2 + 2\varepsilon_3 - 3\varepsilon_4 \end{pmatrix}$$

$$\begin{pmatrix} \zeta_{y_1} \\ \zeta_{y_2} \\ \zeta_{y_3} \end{pmatrix} = \begin{pmatrix} -3\chi_2 + 2\chi_3 - 2\chi_4 \\ 10\chi_1 - 5\chi_2 - \chi_3 + 3\chi_4 \\ -12\chi_1 - 3\chi_2 - 4\chi_4 \end{pmatrix} = \begin{pmatrix} \phi_y - 3\varepsilon_2 + 2\varepsilon_3 - 2\varepsilon_4 \\ \phi_y + 10\varepsilon_1 - 5\varepsilon_2 - \varepsilon_3 + 3\varepsilon_4 \\ \phi_y - 12\varepsilon_1 - 3\varepsilon_2 - 4\varepsilon_4 \end{pmatrix}$$

Like the one-dimensional case, it is possible to start out with measurements $\tilde{\chi}_j$ which are a multiple of $2\pi$ out from their true value $\chi_j$. However, in creating linear multiples $\zeta_{x_1}$, $\zeta_{x_2}$, $\zeta_{x_3}$ which are estimating the value $\phi_x$, which lies in the range $[-\pi, \pi)$, it is possible to overcome this problem by recording $\tilde{\zeta}_{x_1}$, $\tilde{\zeta}_{x_2}$, $\tilde{\zeta}_{x_3}$, modulo $2\pi$.

Now it is possible to use the techniques of the one-dimensional case to provide estimates $\hat{\phi}_x$, $\hat{\phi}_y$ for $\phi_x$ and $\phi_y$.

Compare the 1-D equations $\quad \zeta = \beta\xi + P^T\varepsilon$

to the 2-D equations
$$\zeta_x = \phi_x\xi + A_x\varepsilon$$
$$\zeta_y = \phi_y\xi + A_y\varepsilon$$

Hence the estimators for the 2-D case are:

$$\hat{\phi}_x = \frac{\xi^T C_x^{-1}\zeta_x}{\xi^T C_x^{-1}\xi},$$

$$\hat{\phi}_y = \frac{\xi^T C_y^{-1}\zeta_y}{\xi^T C_y^{-1}\xi}$$

where $\quad C_x = A_x R A_x^T, \quad C_y = A_y R A_y^T \quad$ and $R$ is the covariance matrix of the $\varepsilon_i$'s.

These estimators have variances $\dfrac{1}{\xi^T C_x^{-1}\xi}$ and $\dfrac{1}{\xi^T C_y^{-1}\xi}$ respectively.

In estimating $\phi_x$ and $\phi_y$, estimates are also obtained for $v_x$ and $v_y$ since $\quad \phi_x = \dfrac{2\pi d_0 v_x}{\lambda}, \quad$ and $\quad \phi_y = \dfrac{2\pi d_0 v_y}{\lambda}.$

$$\hat{\mathbf{v}} = \left( v_x, v_y, \sqrt{1 - v_x^2 - v_y^2} \right)^T.$$

So the above estimates provide an estimate for $\hat{\mathbf{v}}$. If the method is repeated several times to get different estimates for $\hat{\mathbf{v}}$, the technique builds up a most likely position for a transmitter of the plane wave of electromagnetic radiation. The technique involves minimising the squares of the errors in estimating $v_x$ and $v_y$.

It is to be noted that the errors for $\phi_x$ and $\phi_y$ are not independent and that they have a degree of covariance. This covariance can be calculated and allowed for but this is not described in detail here.

Whilst the present invention has been described with reference to one-dimensional and two-dimensional antenna arrays, it will be appreciated that the invention can also be extended to three-dimensional arrays. The antennas can be arranged in a non-planar array provided the boresight of each antenna is parallel. Here, in order to determine $\phi_x$, $\phi_y$ and $\phi_z$, three matrices $Q_x$, $Q_y$ and $Q_z$ need to be determined so that the three-dimensional array can be resolved into three orthogonal linear arrays having spacing vectors $\mathbf{k}_x$, $\mathbf{k}_y$ and $\mathbf{k}_z$. The respective integer values of the vectors $\mathbf{k}_x$, $\mathbf{k}_y$ and $\mathbf{k}_z$ have the highest common factor of 1.

In the three-dimensional case, it is possible to measure both angle of arrival and frequency of the incident radiation simultaneously.

It will also be appreciated that, whilst the invention has been described with reference to antenna arrays having three and four antennas, the invention is not limited to such numbers and any suitable number of antennas may be used in the antenna array provided the spacing requirements discussed above are met.

**Claims**

1. A method of determining relative positions of at least three antennas of an antenna array utilized in an interferometer arrangement, the antenna array arranged to receive a plane wave of electromagnetic radiation from a transmitter located at an unknown angle; each of the antenna being spaced from one another in an x dimension and a y dimension, the x and y dimensions being orthogonal; the method comprising the steps of:

   a) determining a maximum size allowed for the antenna array in the x dimension and the y dimension;
   b) determining the number of antennas and number of antenna pairs to be used for receiving the plane wave of electromagnetic radiation and making phase difference measurements;

c) selecting a unit spacing for each of the x and y dimensions determined by the frequency of the electromagnetic radiation to be received and the unambiguous angle range desired in each of the x and y dimensions;

d) producing a set of physical spacing matrices $\{K\}$ where $K = [K_x \ K_y]$ and $K_x$ and $K_y$ are the respective $x$- and $y$-coordinate spacings; the integer values of $K_x$ and $K_y$ representing multiples of the unit spacing for the respective x and y dimensions; and where producing the set of physical spacing matrices includes iterating over all possible physical x- and y- coordinates;

e) determining sets $\{K'_x\}$ and $\{K'_y\}$ of meta x-coordinate spacings and meta $y$-coordinate spacings respectively, such that: highest common factor of the spacings of each $K'_x$ is 1; *highest common factor of* the spacings of each $K'_y$ is 1;

f) deriving a set of candidate geometries $(K, Q_x, Q_y)$ by finding combinations of $K$, $K'_x$ and $K'_y$ *which have respective integer mapping matrixes $O_x$, $Q_y$ such that* respective integer mapping matrices $O_x$ and $O_y$ applied to the physical spacings $K_x$ and $K_y$ satisfy $Q_xK_x=K'_x$ and $QxKy =0$, and $Q_yK_y = K'_y$ and $QyKx = 0$;

g) for each candidate geometry, analysing candidates of the candidate set to identify a preferred physical arrangement of the plurality of antennas in the antenna array, comprising:

(i) finding matrices $P_x$ and $P_y$ such that $P_xK'_x= \xi$ and $P_yK'_y= \xi$, where $\xi$ is a column vector of all ones

(ii) rejecting candidates of the set with no solution; and

(iii) recording candidate geometries $(K,Q_x,Q_y,P_x,P_y)$ in the candidate set;

(iv) for each candidate antenna geometry, statistical measurement accuracy is calculated and

(v) select the best candidate antenna geometries for constructing a base plate of the antenna array.

**Patentansprüche**

1. Verfahren zum Bestimmen von Relativpositionen von mindestens drei Antennen eines Antennenfeldes, das in einer Interferometer-Anordnung verwendet wird, wobei das Antennenfeld eingerichtet ist, um eine ebene Welle einer elektromagnetischen Strahlung von einem Sender zu empfangen, der sich bei einem unbekannten Winkel befindet; wobei alle Antennen voneinander in eine x-Dimension und eine y-Dimension beabstandet sind, wobei die x- und y-Dimension orthogonal sind; wobei das Verfahren die Schritte umfasst, dass:

a) eine Maximalgröße in die x-Dimension und in die y-Dimension bestimmt wird, die für das Antennenfeld zulässig ist;

b) die Anzahl der Antennen und eine Anzahl von Antennenpaaren bestimmt werden, die zum Empfangen der ebenen Welle der elektromagnetischen Strahlung und zum Durchführen von Phasendifferenzmessungen verwendet werden sollen;

c) ein Einheitsabstand für jede der x- und y-Dimensionen, der durch die Frequenz der zu empfangenden elektromagnetischen Strahlung bestimmt wird, und der eindeutige Winkelbereich gewählt werden, der in jeder der x-und y-Dimensionen gewünscht wird;

d) ein Satz von physikalischen Abstandsmatrizen $\{K\}$ erzeugt wird, wobei $K = [K_x \ K_y]$ ist und $K_x$ und $K_y$ die jeweiligen x- und y-Koordinatenabstände sind; wobei die ganzzahligen Werte von $K_x$ und $K_y$ Vielfache des Einheitsabstands für die jeweilige x-und y-Dimension repräsentieren; und wobei das Erzeugen des Satzes von physikalischen Abstandsmatrizen umfasst, dass über alle möglichen physikalischen x- und y-Koordinaten iteriert wird;

e) Sätze $\{K'_x\}$ und $\{K'_y\}$ von Meta-x-Koordinatenabständen bzw. Meta-y-Koordinatenabständen so bestimmt werden, dass:

ein höchster gemeinsamer Faktor der Abstände von jeder $K'_x$ gleich 1 ist;
ein höchster gemeinsamer Faktor der Abstände von jeder $K'_y$ gleich 1 ist;

f) ein Satz von Kandidaten-Geometrien $(K, Q_x, Q_y)$ hergeleitet wird, indem Kombinationen von $K$, $K'_x$ und $K'_y$ gesucht werden, die jeweilige ganzzahlige Abbildungsmatrizen $Q_x$, $Q_y$ aufweisen, sodass jeweilige ganzzahlige Abbildungsmatrizen $Q_x$ und $Q_y$, die auf die physikalischen Abstände $K_x$ und $K_y$ angewendet werden, $Q_xK_x = K'_x$ und $Q_xK_y = 0$, und $Q_yK_y = K'_y$ und $Q_yK_x = 0$ erfüllen;

g) für jede Kandidaten-Geometrie Kandidaten des Kandidatensatzes analysiert werden, um eine bevorzugte physikalische Anordnung der Vielzahl von Antennen in dem Antennenfeld zu identifizieren, was umfasst, dass:

(i) Matrizen $P_x$ und $P_y$ derart gesucht werden, dass $P_xK'_x = \xi$ und $P_yK'_y = \xi$, wobei $\xi$ ein Spaltenvektor mit

lauter Einsen ist;

(ii) Kandidaten des Satzes ohne Lösung abgelehnt werden; und

(iii) Kandidaten-Geometrien (K, $Q_x$, $Q_y$, $P_x$, $P_y$) in dem Kandidatensatz aufgezeichnet werden;

(iv) für jede Kandidaten-Antennengeometrie eine statistische Messgenauigkeit berechnet wird und

(v) die besten Kandidaten-Antennengeometrien zum Aufbauen einer Grundplatte des Antennenfelds gewählt werden.

## Revendications

1. Procédé de détermination de positions relatives d'au moins trois antennes d'un réseau d'antennes utilisé dans un agencement d'interféromètre, le réseau d'antennes étant agencé de manière à recevoir une onde plane de rayonnement électromagnétique en provenance d'un émetteur situé à un angle inconnu ; chaque antenne étant espacée d'une autre dans une dimension « x » et une dimension « y », les dimensions « x » et « y » étant orthogonales ; le procédé comprenant les étapes ci-dessous consistant à :

a) déterminer une taille maximale autorisée pour le réseau d'antennes dans la dimension « x » et la dimension « y » ;

b) déterminer le nombre d'antennes et un nombre de paires d'antennes à utiliser pour recevoir l'onde plane de rayonnement électromagnétique et réaliser des mesures de différence de phase ;

c) sélectionner un espacement unitaire pour chacune des dimensions « x » et « y » déterminées par la fréquence du rayonnement électromagnétique devant être reçu, et la plage d'angle non ambiguë souhaitée dans chacune des dimensions « x » et « y » ;

d) produire un ensemble de matrices d'espacement physique {K} où $K = [K_x K_y]$ et $K_x$ et $K_y$ sont les espacements de coordonnées « x » et « y » respectifs ;

dans lequel les valeurs entières de $K_x$ et $K_y$ représentent des multiples de l'espacement unitaire pour les dimensions « x » et « y » respectives ; et où l'étape de production de l'ensemble de matrices d'espacement physique inclut l'étape consistant à itérer sur toutes les coordonnées « x » et « y » physiques possibles ;

e) déterminer des ensembles {$K'_x$} et {$K'_y$} d'espacements de méta-coordonnées « x » et d'espacements de méta-coordonnées « y », respectivement, de sorte que :

un facteur commun le plus élevé des espacements de chaque $K'_x$ soit égal à « 1 » ;
un facteur commun le plus élevé des espacements de chaque $K'_y$ soit égal à « 1 » ;

f) dériver un ensemble de géométries candidates ($K$, $Q_x$, $Q_y$) en trouvant des combinaisons de $K$, $K'_x$ et $K'_y$ qui présentent des matrices de mise en correspondance d'entiers respectives $Q_x$, $Q_y$ de sorte que des matrices de mise en correspondance d'entiers respectives $Q_x$ et $Q_y$ appliquées aux espacements physiques $K_x$ et $K_y$ satisfassent $Q_x K_x = K'_x$ et $Q_x K_y = 0$, et $Q_y K_y = K'_y$ et $Q_y K_x = 0$ ;

g) pour chaque géométrie candidate, analyser des candidats de l'ensemble de candidats en vue d'identifier un agencement physique préféré de la pluralité d'antennes dans le réseau d'antennes, comprenant les étapes ci-dessous consistant à ou dans lesquelles :

(i) trouver des matrices $P_x$ et $P_y$ de sorte que $P_x K'_x = \xi$ et $P_y K'_y = \xi$, où « $\xi$ » est un vecteur colonne de toutes les valeurs « 1 » ;

(ii) rejeter des candidats sans solution de l'ensemble ; et

(iii) enregistrer des géométries candidates (K, $Q_x$, $Q_y$, $P_x$, $P_y$) dans l'ensemble de candidats ;

(iv) pour chaque géométrie d'antenne candidate, une précision de mesures statistiques est calculée ; et

(v) sélectionner les meilleures géométries d'antennes candidates en vue de construire une plaque de base du réseau d'antennes.

*Fig. 1*

Fig. 2

EP 2 977 783 B1

**Fig. 3**

Fig. 4

**Fig. 5**

EP 2 977 783 B1

$3d_0$     $2d_0$

A     B     C

*Fig. 6*

**Fig. 7**

Fig. 8

**Fig. 9**

EP 2 977 783 B1

## REFERENCES CITED IN THE DESCRIPTION

**Patent documents cited in the description**

- EP 1026777 A